# EUROPÄISCHE PATENTSCHRIFT

(11) **EP 1 580 214 B1**
(45) Veröffentlichungstag und Bekanntmachung des Hinweises auf die Patenterteilung: **07.06.2006**
(21) Anmeldenummer: 05005898.1
(22) Anmeldetag: 17.03.2005
(51) Int. Cl.: C08G 77/26, C08L 83/08

(54) **Vernetzbare Massen auf der Basis von Organosiliciumverbindungen**
Crosslinkable compositions based on organosilicon compounds
Compositions réticulables à partir des composées organosilicones

(30) Priorität: 23.03.2004 DE 102004014217
(43) Veröffentlichungstag der Anmeldung: 28.09.2005
(73) Patentinhaber: Wacker Chemie AG, 81737 München (DE)
(72) Erfinder: Scheim, Uwe, Dr., 01640 Coswig (DE); Prasse, Marko, 01587 Riesa (DE)
(74) Vertreter: Budczinski, Angelika

(56) Entgegenhaltungen:
- DE-A1- 4 234 846
- DE-A1- 10 134 634
- DE-A1- 10 137 855
- DE-A1- 10 212 658
- DE-C1- 10 151 478
- US-A- 5 969 075

## Beschreibung

Die Erfindung betrifft vernetzbare Massen auf der Basis von Organosiliciumverbindungen mit regelbarem Modul, ein Verfahren zu deren Herstellung sowie deren Verwendung.

Unter Ausschluss von Wasser lagerfähige, bei Zutritt von Wasser bei Raumtemperatur zu Elastomeren vulkanisierende Einkomponenten-Dichtmassen sind bekannt. Diese Produkte werden in großen Mengen zum Beispiel in der Bauindustrie eingesetzt. Die Basis dieser Mischungen sind Polymere, die durch Silylgruppen terminiert sind, die reaktive Substituenten wie OH-Gruppen oder hydrolysierbare Gruppen, wie zum Beispiel Alkoxygruppen, tragen. Durch die Kettenlänge der Polymere können wesentliche Eigenschaften dieser RTV1-Mischungen beeinflusst werden. Insbesondere der sogenannte Modul, das ist der Spannungswert bei 100% Dehnung eines ausgehärteten Probekörpers, lässt sich durch die Kettenlänge regulieren. Vor allem für Fugendichtmassen ist es erwünscht, dass dieser Modul niedrig ist, damit möglichst wenig Kräfte auf die Fugenflanken einwirken. Aus ökonomischen und technischen Gründen steht jedoch für die Produktion von Dichtmassenmischungen nur eine begrenzte Palette von Polymerkettenlängen zur Verfügung. Insbesondere die für sehr niedermodulige Dichtstoffe erforderlichen großen Kettenlängen führen zu sehr hohen Viskositäten der Polymere, so dass solche Produkte nur schwer handhabbar sind. Ein weiterer Nachteil von Polymeren mit hohen Viskositäten liegt darin, dass die daraus hergestellten Massen sich nur schwer aus den Gebinden auspressen lassen, da auch die Dichtmassenmischungen eine hohe Viskosität haben. Des weiteren ist seit langem bekannt, dass über die Menge an nichtreaktiven Weichmachern und aktiven Füllstoffen der Modul variiert werden kann. Hier sind aber Grenzen dadurch gesetzt, dass nicht beliebig variiert werden kann, da sonst die Massen zum Beispiel bei zuviel Weichmacher oder zuwenig aktivem Füllstoff zu nierdrigviskos werden, worunter das Applikationsverhalten der pastösen Dichtmasse leidet.

Darüber hinaus ist es bekannt Polymere zu verwenden, die teilweise an einem Kettenende eine nichtreaktive Gruppe enthalten. Beispielsweise sind in EP 1 141 132 A1 Polymere beschrieben, die durch Umsetzung von vinylterminierten Polydimethylsiloxanen mit Si-H-haltigen Vernetzern erhalten werden, wobei die Vernetzer im Unterschuss eingesetzt werden, so dass unreaktive Vinylgruppen in der Polymermischung verbleiben. Die vinylterminierten Poylmere sind aber verhältnismäßig kostenintensiv, womit das ganze für den Einsatz in Dichtmassen unökonomisch wird. Außerdem lässt sich die Herstellung des Polymers nicht ohne weiteres in die Dichtmassenherstellung integrieren, so dass ein separater Schritt notwenig wird. In EP 916 702 A1 sind Polymere beschrieben, die teilweise Trimethylsilylgruppen als nicht reaktive Endgruppen im Polymer haben. Auch in diesem Fall muss die Polymerherstellung vor der eigentlichen Dichtmassenherstellung separat erfolgen.

Gegenstand der Erfindung sind vernetzbare Massen auf der Basis von Organosiliciumverbindungen enthaltend
(a) Polymere der Formel

   XₙR₃₋ₙSi-A-SiR₂-(CH₂)₃NHY (I),

   wobei
   n gleich 1 oder 2 ist,
   X gleich oder verschieden sein kann und Hydroxylrest oder hydrolysierbarer Rest bedeutet,
   R gleich oder verschieden sein kann und einen einwertigen, gegebenenfalls substituierten Kohlenwasserstoffrest bedeutet,
   Y gleich Wasserstoffatom oder Rest -Si(CH₃)₂(CH₂)₃NH₂ ist und
   A einen zweiwertigen organischen oder siliciumorganischen Rest bedeutet,
(b) Polymere der Struktur

   X¹ₖR⁵₃₋ₖSi-A¹-SiX¹ₖR⁵₃₋ₖ (II),

   wobei
   k jeweils gleich oder verschieden sein kann und 1 oder 2 ist,
   R⁵ gleich oder verschieden sein kann und eine für R angegebenen Bedeutung hat,
   A¹ eine für Rest A angegebene Bedeutung hat und
   X¹ gleich oder verschieden sein kann und eine für X angegebenen Bedeutung hat,
   gegebenenfalls
(c) Silane der Formel

   R⁶ₘSiX²₄₋ₘ (III)

   und/oder deren Teilhydrolysate, wobei
   m 0 oder 1 ist,
   R⁶ gleich oder verschieden sein kann und eine für R angegebene Bedeutung hat und
   X² gleich oder verschieden sein kann und eine für X angegebene Bedeutung hat,
   und gegebenenfalls
(d) Silane der Formel

   R⁴ₒSiR⁷ₚX³₄₋ₒ₋ₚ (IV)

   und/oder deren Teilhydrolysate, wobei
   p 0 oder 1 ist,
   o 1 oder 2 ist,
   R⁷ gleich oder verschieden sein kann und eine für R angegebene Bedeutung hat,
   X³ gleich oder verschieden sein kann und eine für X angegebene Bedeutung hat und
   R⁴ gleich oder verschieden sein kann und mit Stickstoffatom, Sauerstoffatom, Schwefelatom und/oder Halogenatom substituierte, einwertige, SiC-gebundene Kohlenwasserstoffreste bedeutet, mit der Maßgabe, dass die Summe o+p kleiner 3 ist.

Bei den hydrolysierbaren Gruppen X kann es sich um beliebige, bisher bekannte Gruppen handeln, wie Acetoxy-, Oximato- und Organyloxygruppen.

Beispiele für Reste X sind Hydroxylrest, Acyloxyreste wie der Acetoxyrest, Oximatoreste wie der Metylethylketoximorest und Organyloxygruppen, wie Methoxyrest, Ethoxyrest und Alkoxyethoxyreste wie der Methoxyethoxyrest.

Bevorzugt handelt es sich bei Rest X um Alkoxy- und Acyloxyreste, besonders bevorzugt um Alkoxyreste, insbesondere um Methoxyreste.

Bevorzugt handelt es sich bei Rest R und R⁵ jeweils unabhängig voneinander um einwertige Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Pöly)glykolresten substituiert sind, wobei letztere aus Oxyethylen- und/oder Oxypropyleneinheiten aufgebaut sind, besonders bevorzugt um Alkylreste mit 1 bis 12 Kohlenstoffatomen, insbesondere um den Methylrest.

Beispiele für Reste R und R⁵ sind Alkylreste, wie der Methyl-, Ethyl-, n-Propyl-, iso-Propyl-, 1-n-Butyl-, 2-n-Butyl-, isoButyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R und R⁵ sind 3-Aminopropyl-, 3-(2-Aminoethyl)aminopropyl-, 3-Cyclohexylaminopropyl-, N-Cyclohexylaminomethyl-, 3-Glycidoxypropyl- und 3-Methacryloxypropylrest.

Bevorzugt handelt es sich bei Rest Y um Wasserstoff.

Beispiele für Rest A und A¹ sind jeweils unabhängig voneinander zweiwertige siliciumorganische Reste, wie PolydiorganosiloxanReste, sowie zweiwertige organische Reste, wie Polyetherreste, Polyurethanreste, Polyharnstoffreste, Polyalkylenreste, wie zum Beispiel Polyisobutylenreste, und Polyacrylatreste.

Bevorzugt handelt es sich bei Rest A und A¹ jeweils unabhängig voneinander um zweiwertige Polyetherreste oder zweiwertige Polydiorganosiloxanreste, besonders bevorzugt um zweiwertige Polydiorganosiloxanreste, insbesondere um zweiwertige Polydimethylsiloxane.

Beispiele für Polymere der Formel (I) sind
HO (Si (CH₃)₂O)₃₀₋₁₀₀₀Si(CH₃)₂(CH₂)₃NH₂,
HO (Si (CH₃)₂O)₃₀₋₁₀₀₀Si(CH₃)₂(CH₂)₃NHSi(CH₃)₂(CH₂)₃NH₂,
(CH₃O)₂(CH₃)SiO(Si (CH₃)₂O)₃₀₋₁₀₀₀Si(CH₃)₂(CH₂)₃NH₂,
(CH₃O)₂(CH₃)SiO(Si (CH₃)₂O)₃₀₋₁₀₀₀Si(CH₃)₂(CH₂)₃NHSi(CH₃)₂(CH₂)₃NH₂, (CH₃C(O)O)₂(CH₃)SiO (Si (CH₃)₂O)₃₀₋₁₀₀₀Si(CH₃)₂(CH₂)₃NH₂,
(CH₃C(O)O)₂(CH₃)SiO(Si (CH₃)₂O)₃₀₋
₁₀₀₀Si(CH₃)₂(CH₂)₃NHSi(CH₃)₂(CH₂)₃NH₂,
(CH₃O)₂(CH₃)SiO(Si (CH₃)₂O)₀₋₁₀₀(CH₂)₃O(CH₂CH(CH₃)O)₁₀₋
₁₀₀₀(CH₂)₃O(Si (CH₃)₂O)₀₋₁₀₀Si(CH₃)₂(CH₂)₃NH₂ und
(CH₃O)₂(CH₃)SiO(Si (CH₃)₂O)₀₋₁₀₀(CH₂)₃O(CH₂CH(CH₃)O)₁₀₋
₁₀₀₀(CH₂)₃O(Si (CH₃)₂O)₀₋₁₀₀Si(CH₃)₂(CH₂)₃NHSi(CH₃)₂(CH₂)₃NH₂,
wobei HO(Si(CH₃)₂O)₃₀₋₁₀₀₀Si(CH₃)₂(CH₂)₃NH₂,
HO (Si (CH₃)₂O)₃₀₋₁₀₀₀Si(CH₃)₂(CH₂)₃NHSi(CH₃)₂(CH₂)₃NH₂,
(CH₃O)₂(CH₃)SiO(Si (CH₃)₂O)₃₀₋₁₀₀₀Si(CH₃)₂(CH₂)₃NH₂ und
(CH₃O)₂(CH₃) SiO(Si (CH₃)₂O)₃₀₋₁₀₀₀Si(CH₃)₂(CH₂)₃NHSi(CH₃)₂(CH₂)₃NH₂ bevorzugt und HO (Si (CH₃)₂O)₃₀₋₁₀₀₀Si(CH₃)₂(CH₂)₃NH₂ sowie
(CH₃O)₂(CH₃)SiO(Si (CH₃)₂O)₃₀₋₁₀₀₀Si(CH₃)₂(CH₂)₃NH₂
besonders bevorzugt sind.

Die erfindungsgemäß eingesetzten Polymere der Formel (I) haben eine Viskosität von bevorzugt 10² bis 10⁸ mPas, besonders bevorzugt von 1 000 bis 350 000 mPas, jeweils bei 25°C.

Die Polymere der Formel (I) können nach in der Chemie gängigen Methoden hergestellt werden.

Beispielsweise können die erfindungsgemäß eingesetzten Polymere (a) durch Umsetzung von cyclischen Silazanen der Formel (V) 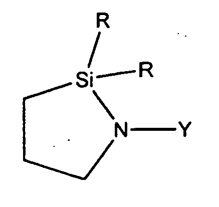 mit Si-gebundene Hydroxylgruppen aufweisenden Polymeren, wie z.B. solchen gemäß Formel (II), hergestellt werden, wobei R und Y eine der oben angegebenen Bedeutungen haben.

Die erfindungsgemäßen Massen enthalten Polymer der Formel (I) in Mengen von bevorzugt 10 bis 90 Gewichtsteilen, besonders bevorzugt 10 bis 50 Gewichtsteilen, insbesondere 10 bis 25 Gewichtsteilen, jeweils bezogen auf 100 Gewichtsteile vernetzbarer Masse.

Beispiele für Reste X¹ sind die für Rest X angegebenen Beispiele.

Bevorzugt handelt es sich bei Rest X¹ um Hydroxylgruppen.

Beispiele für Polymere der Formel (II) sind dialkoxyalkylsilylterminierte Polydialkylsiloxane, dialkoxyalkylsilylterminierte Polyalkylenglycole, dialkoxyalkylsilylterminierte Polyurethane, dialkoxyalkylsilylterminierte Polyharnstoffe, dialkoxyalkylsilylterminierte Polyharnstoff-Polysiloxan-Copolymere, dialkoxyalkylsilylterminierte Polyisobutylene und OH-terminierte Polydialkylsiloxane, wobei dimethoxymethylsilylterminierte Polydimethylsiloxane, dimethoxymethylsilylterminierte Polypropylenglycole und OH-terminierte Polydimethylsiloxane bevorzugt und OH-terminierte Polydimethylsiloxane besonders bevorzugt sind.

Die erfindungsgemäß eingesetzten Polymere der Formel (II) haben eine Viskosität von bevorzugt 10² bis 10⁸ mPas, besonders bevorzugt von 1 000 bis 350 000 mPas, jeweils bei 25°C.

Bei den Polymeren der Formel (II) handelt es sich um handelsübliche Produkte bzw. können nach in der Chemie gängigen Methoden hergestellt werden.

Die erfindungsgemäßen Massen enthalten Polymer der Formel (II) in Mengen von bevorzugt 10 bis 90 Gewichtsteilen, besonders bevorzugt 30 bis 90 Gewichtsteilen, insbesondere 30 bis 70 Gewichtsteilen, jeweils bezogen auf 100 Gewichtsteile vernetzbarer Masse.

Beispiele für Reste X² sind die für Rest X angegebenen Beispiele.

Bevorzugt handelt es sich bei Rest X² um Acyloxyreste und Alkoxyreste, wobei Acetoxy-, tert-Butoxy-, Methoxy- und Ethoxyrest besonders bevorzugt sind.

Beispiele für Rest R⁶ sind die für Rest R angegebenen Beispiele.

Bevorzugt handelt es sich bei Rest R⁶ um einwertige Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen oder Cyanogruppen substituiert sind, besonders bevorzugt um Kohlenwasserstoffreste mit 1 bis 12 Kohlenstoffatomen, insbesondere um den Methyl- und den Vinylrest.

Beispiele für Silane der Formel (III) sind Methyltriacetoxysilan, Ethyltriacetoxysilan, n-Propyltriacetoxysilan, Diacetoxy-di(tert.-butoxy)silan, Methyltrimethoxysilan, Vinyltrimethoxysilan, Methyltriethoxysilan, Vinyltriethoxysilan, Tetraethoxysilän, Tetra-n-propoxysilan, Tetra-isopropoxysilan, Methyltris-(methylethylketoximo)silan, Vinyltris(methylethylketoximo)silan, Tetrakis(methylethylketoximo)silan, Methyltris(methylisobutylketoximo)silan, Vinyltris(methylisobutylketoximo)silan und/oder deren Teilhydrolysate, wobei Methyltrimethoxysilan und Vinyltrimethoxysilan und/oder deren Teilhydrolysate besonders bevorzugt sind.

Bei den Teilhydrolysaten der erfindungsgemäß eingesetzten Silane der Formel (III) kann es sich um Teilhomohydrolysate handeln, d.h. Teilhydrolysate von einer Art von Silan der Formel (III), wie auch um Teilcohydrolysate, d.h. Teilhydrolysate von mindestens zwei verschiedenen Arten von Silanen der Formel (III).

Handelt es sich bei der in den erfindungsgemäßen Massen gegebenenfalls eingesetzten Verbindung (c) um Teilhydrolysate von Silanen der Formel (III), so sind solche mit 4 bis 20 Siliciumatomen bevorzugt.

Bei den Silanen der Formel (III) handelt es sich um handelsübliche Produkte bzw. können nach in der Chemie gängigen Methoden hergestellt werden.

Die erfindungsgemäßen Massen enthalten Silane der Formel (III) und/oder deren Teilhydrolysate in Gesamtmengen von bevorzugt 0 bis 15 Gewichtsteilen, besonders bevorzugt 0,5 bis 5 Gewichtsteilen, insbesondere 2 bis 5 Gewichtsteilen, jeweils bezogen auf 100 Gewichtsteile vernetzbarer Masse.

Beispiele für Reste X³ sind die für Rest X angegebenen Beispiele.

Bevorzugt handelt es sich bei Rest X³ um Alkoxyreste, wobei Methoxy- und Ethoxyrest besonders bevorzugt sind.

Beispiele für Rest R⁷ sind die für Rest R angegebenen Beispiele.

Bevorzugt handelt es sich bei Rest R⁷ um einwertige Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen oder Cyanogruppen substituiert sind, besonders bevorzugt um Kohlenwasserstoffreste mit 1 bis 12 Kohlenstoffatomen, insbesondere um Methylrest.

Beispiele für Rest R⁴ sind 3-Aminopropyl-, 3-(2-Aminoethyl)aminopropyl-, 3-Glycidoxypropyl-, 3-Methyacryloxypropyl-, 3-Mercaptopropyl-, Aminomethyl-, N-Cyclohexylaminomethyl- und der N,N-Diethylaminomethylrest.

Bevorzugt handelt es sich bei Rest R⁴ um mit Aminogruppen substituierte, einwertige, SiC-gebundene Kohlenwasserstoffreste mit 1 bis 20 Kohlenstoffatomen, wobei solche Kohlenwasserstoffreste mit 1 oder 3 Kohlenstoffatomen besonders bevorzugt sind, insbesondere aminosubstituierte Methyl- und n-Propylreste.

Beispiele für Silane der Formel (IV) sind 3-Aminopropyltrimethoxysilan, 3-Aminopropyltriethoxysilan, 3-(2-Aminoethyl)aminopropyltrimethoxysilan, 3-(2-Aminoethyl)aminopropyltriethoxysilan, 3-(2-Aminoethyl)aminopropylmethyldimethoxysilan, N-Cyclohexyl-3-aminopropyltrimethoxysilan, N-Cyclohexylaminomethyltriethoxysilan, N,N-Diethylaminomethylmethyldimethoxysilan und/oder deren Teilhydrolysate, wobei 3-Aminopropyltriethoxysilan, 3-(2-Aminoethyl)aminopropyltriethoxysilan, N-Cyclohexyl-3-aminopropyltrimethoxysilan und N-Cyclohexylaminomethyltriethoxysilan besonders bevorzugt sind.

Bei den Teilhydrolysaten der erfindungsgemäß eingesetzten Silane der Formel (IV) kann es sich um Teilhomohydrolysate handeln, d.h. Teilhydrolysate von einer Art von Silan der Formel (IV), wie auch um Teilcohydrolysate, d.h. Teilhydrolysate von mindestens zwei verschiedenen Arten von Silanen der Formel (IV).

Handelt es sich bei der in den erfindungsgemäßen Massen gegebenenfalls eingesetzten Verbindung (d) um Teilhydrolysate von Silanen der Formel (IV), so sind solche mit bis zu 20 Siliciumatomen bevorzugt.

Bei den Silanen der Formel (IV) handelt es sich um handelsübliche Produkte bzw. können nach in der Chemie gängigen Methoden hergestellt werden.

Die erfindungsgemäßen Massen enthalten Silane der Formel (IV) und/oder deren Teilhydrolysate in Mengen von bevorzugt 0 bis 5 Gewichtsteilen, besonders bevorzugt 0,2 bis 2 Gewichtsteilen, insbesondere 0,5 bis 1,5 Gewichtsteilen, jeweils bezogen auf 100 Gewichtsteile vernetzbarer Masse.

Zusätzlich zu den oben beschriebenen Komponenten (a), (b), (c) und (d) können die erfindungsgemäßen Massen nun alle weiteren Stoffe enthalten, die auch bisher in durch Kondensationsreaktion vernetzbaren Massen eingesetzt worden sind, wie z.B. Katalysatoren (e), Weichmacher (f), Füllstoffe (g) und Additive (h).

Beispiele für Katalysatoren (e) sind die bisher schon bekannten Titanverbinduhgen und organische Zinnverbindungen, wie Di-n-butylzinndilaurat und Di-n-butylzinndiacetat, Di-n-butylzinnoxid, Dioctylzinndiacetat, Dioctylzinndilaurat, Dioctylzinnoxid sowie Umsetzungsprodukte dieser Verbindungen mit Alkoxysilanen wie Tetraethoxysilan und deren Komplexe mit Phosphorverbindungen wie Phosphorsäureester oder Phosphonsäuren, wobei Di-n-butylzinndiacetat und Dibutylzinnoxid in Tetraethylsilikat-Hydrolysat bevorzugt sind und das Umsetzungsprodukt von Di-n-butylzinnoxid mit Tetraethylsilikat-Hydrolysat und Octylphosphonsäure besonders bevorzugt ist.

Falls die erfindungsgemäßen Massen Katalysator (e) enthalten, handelt es sich um Mengen von vorzugsweise 0,01 bis 3 Gewichtsteilen, bevorzugt 0,05 bis 2 Gewichtteilen, jeweils bezogen auf 100 Gewichtsteile der vernetzbaren Masse.

Beispiele für Weichmacher (f) sind bei Raumtemperatur flüssige, durch Trimethylsiloxygruppen endblockierte Dimethylpolysiloxane, insbesondere mit Viskositäten bei 25°C im Bereich zwischen 5 und 1000 mPas, Phthalsäureester, Zitronensäureester und Adipinsäureester sowie hochsiedende Kohlenwasserstoffe, wie zum Beispiel Paraffinöle oder Mineralöle bestehend aus naphthenischen und paraffinischen Einheiten.

Die erfindungsgemäßen Massen enthalten Weichmacher (f) in Mengen von vorzugsweise 0 bis 50 Gewichtsteilen, besonders bevorzugt 10 bis 30 Gewichtsteilen, insbesondere 15 bis 25 Gewichtsteilen, jeweils bezogen auf 100 Gewichtsteile der vernetzbaren Masse.

Beispiele für Füllstoffe (g) sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; faserförmige Füllstoffe, wie Asbest sowie Kunststofffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen. Falls Füllstoffe (g) eingesetzt werden, handelt es sich bevorzugt um hydrophile pyrogene Kieselsäure und gefälltes oder gemahlenes Calciumcarbonat.

Die erfindungsgemäßen Massen enthalten Füllstoffe (g) in Mengen von vorzugsweise 0 bis 60 Gewichtsteilen, besonders bevorzugt 1 bis 50 Gewichtsteilen, insbesondere 5 bis 50 Gewichtsteilen, jeweils bezogen auf 100 Gewichtsteile der vernetzbaren Masse.

Beispiele für Additive (h) sind Pigmente, Farbstoffe, Riechstoffe, Oxidationsinhibitoren, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit einem SiC-gebundenen Mercaptoalkylrest, zellenerzeugende Mittel, z.B. Azodicarbonamid, Hitzestabilisatoren und Thixotropiermittel, wie beispielsweise Phosphorsäureester, Stabilisatoren wie Polyglycole und organischen Lösungsmittel, wie Alkylaromaten.

Die erfindungsgemäßen Massen enthalten Additive (h) in Mengen von vorzugsweise 0 bis 100 Gewichtsteilen, besonders bevorzugt 0 bis 30 Gewichtsteilen, insbesondere 0 bis 10 Gewichtsteilen, jeweils bezogen auf 100 Gewichtsteile der vernetzbaren Masse.

Bevorzugt handelt es sich bei den erfindungsgemäßen Massen um solche, die aus
(a) Polymeren der Formel (I),
(b) Polymeren der Formel (II),
   gegebenenfalls
(c) Silanen der Formel (III),
   gegebenenfalls
(d) Silanen der Formel (IV),
   gegebenenfalls
(e) Katalysator,
   gegebenenfalls
(f) Weichmacher,
   gegebenenfalls
(g) Füllstoffen und
   gegebenenfalls
(h) Additiven
   bestehen.

Zur Bereitung der erfindungsgemäßen Massen können alle Bestandteile in beliebiger Reihenfolge miteinander vermischt werden. Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 35°C bis 135°C. Es können dabei auch eine oder mehrere der eingesetzten Komponenten in situ hergestellt werden.

Bei den einzelnen Bestandteilen der erfindungsgemäßen Massen kann es sich jeweils um eine Art eines solchen Bestandteils wie auch um ein Gemisch aus mindestens zwei verschiedenen Arten derartiger Bestandteile handeln.

Bei einem bevorzugten Verfahren zur Herstellung der erfindungsgemäßen Massen wird in einer
1.Stufe
   cyclisches Silazan der Formel (V) mit einem OH-terminierten Po-lydiorganosiloxan umgesetzt, wobei die Mengenverhältnisse so gewählt werden, dass sich bis zu 30%, bevorzugt 10 bis 20%, der am OH-terminierten Polydiorganosiloxan befindlichen OH-Gruppen mit dem cyclischen Silazan der Formel (V) umsetzen können, sowie anschließend in einer
2. Stufe
   durch Zufügen der weiteren Bestandteile (c) bis (h) die vernetzbare Masse nach bekannten Methoden fertiggestellt.

Die Stufen 1 und 2 können technologisch getrennt in unterschiedlichen Aggregaten durchgeführt werden. So ist es zum Beispiel möglich, das cyclische Silazan der Formel (V) direkt im Anschluss an die Herstellung des OH-terminierten Polydimethylsioxan in der gewünschten Menge zu dosieren, wobei eine Mischung aus Polymeren der allgemeinen Formel (I) und der allgemeinen Formel (II) entsteht. Besonders bevorzugt ist es, die Schritte 1 und 2 unmittelbar aufeinanderfolgend im Mischaggregat, das zur Herstellung der vernetzbaren Masse dient, durchzuführen. Dabei ist es nicht notwendig das in der ersten Stufe entstandene Polymer (a) vor Durchführung der 2. Stufe zu isolieren.

Die erfindungsgemäßen Massen sind bei Raumtemperatur und dem Druck der umgebenden Atmosphäre bevorzugt fließfähig oder standfest pastös.

Für die Vernetzung der erfindungsgemäßen Massen reicht der übliche Wassergehalt der Luft aus. Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, z.B. bei -5° bis 15°C oder bei 30° bis 50°C und/oder mittels den normalen Wassergehalt der Luft übersteigenden Konzentrationen von Wasser durchgeführt werden.

Vorzugsweise wird die Vernetzung bei einem Druck von 100 bis 1100 hPa, insbesondere beim Druck der umgebenden Atmosphäre, durchgeführt.

Ein weiterer Gegenstand der vorliegenden Erfindung sind Formkörper, hergestellt durch Vernetzung der erfindungsgemäßen Massen.

Die erfindungsgemäßen Massen können für alle Verwendungszwecke eingesetzt werden, für die unter Ausschluss von Wasser lagerfähige, bei Zutritt von Wasser bei Raumtemperatur zu Elastomeren vernetzende Massen eingesetzt werden können.

Die erfindungsgemäßen Massen eignen sich somit ausgezeichnet beispielsweise als Abdichtmassen für Fugen, einschließlich senkrecht verlaufender Fugen im Falle von standfesten Massen, und ähnlichen Leerräumen von z.B. 10 bis 40 mm lichter Weite, z.B. von Gebäuden, Land-, Wasser- und Luftfahrzeugen, oder als Klebstoffe oder Verkittungsmassen, z.B. im Fensterbau oder bei der Herstellung von Aquarien oder Vitrinen, sowie z.B. zur Herstellung von Schutzüberzügen, einschließlich solcher für der ständigen Einwirkung von Süß- oder Meerwasser ausgesetzte Oberflächen, oder das Gleiten verhindernden Überzügen, oder von gummielastischen Formkörpern sowie für die Isolierung von elektrischen oder elektronischen Vorrichtungen.

Die erfindungsgemäßen Massen haben den Vorteil, dass sie auf einfache Art und Weise herzustellen sind und von leicht zugänglichen Einsatzstoffen ausgegangen werden kann.

Des Weiteren haben die erfindungsgemäßen vernetzbaren Massen den Vorteil, dass sie sich durch eine sehr hohe Lagerstabilität und eine hohe Vernetzungsgeschwindigkeit auszeichnen.

Insbesondere haben die erfindungsgemäßen vernetzbaren Massen den Vorteil, dass Dichtmassen mit niedrigem Modul bereitgestellt werden können, wobei der Modul über den Zusatz einer einzelnen Komponente, insbesondere über Komponente (a), leicht und in weiten Grenzen einstellbar ist, ohne dass die Applikationseigenschaften der Dichtmasse, wie zum Beispiel die Auspressrate, sich wesentlich verändern.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

Die Shore-A-Härte wird nach DIN (Deutsche Industrie Norm) 53505 (Ausgabe August 2000) bestimmt.

Zugfestigkeit, Reißdehnung und Modul (Spannung bei 100% Dehnung) wurden nach DIN 53504 (Ausgabe Mai 1994) an Probekörpern der Form S2 bestimmt.

Die Auspressrate wurde an den in handelsübliche PE-Kartuschen abgefüllten Massen bei einem Druck von 2,5 bar und einer Düsenöffnung von 2 mm bestimmt.

### Beispiel 1

406 g eines α,ω-Dihydroxypolydimethylsiloxans mit einer Viskosität von 80 000 mPas, 182 g eines trimethylsilylendblockierten Polydimethylsiloxans mit einer Viskosität von 1000 mPas und 1,6 g 1,1-Dimethyl-2-(3-aminopropyldimethylsilyl)-1-sila-2-azacyclopentan werden in einem Planetenmischer miteinander gemischt und 60 Minuten gerührt. Anschließend werden 14 g 3-(2-Aminoethyl)aminopropyltriethoxysilan und 29,0 g Vinyltrimethoxysilan zugegeben und das Ganze weitere 15 Minuten gerührt. Schließlich wird der Ansatz durch homogenes Einmischen von 1,1 g Octylphosphonsäure, 63 g pyrogener Kieselsäure mit einer spezifischen Oberfläche von 150 m²/g (käuflich erhältlich unter der Marke HDK® V15 bei der Wacker-Chemie GmbH, D-München) und 0,8 g eines Zinnkatalysators, der hergestellt wird durch Umsetzung von 2,2 Teilen Di-n-butylzinndiacetat und 4 Teilen Tetraethoxysilan, vervollständigt. Die so erhaltene Mischung wird in feuchtigkeitsdichte Gebinde abgefüllt.

Mit der so erhaltenen Masse werden Probekörper hergestellt, indem die Masse als 2 mm dicke Schicht auf eine Unterlage aus Polyethylen aufgetragen wird und anschließend 7 Tage bei 50% relativer Luftfeuchte und 23°C vernetzen gelassen wird. Anschlie-ßend werden aus diesen Platten Prüfkörper der Form S2 gemäß DIN 53504 ausgestanzt.

Die so hergestellten Probekörper werden hinsichtlich ihrer mechanischen Werte untersucht. Außerdem wurde an der unvernetzten Masse die Auspressrate bestimmt. Die Ergebnisse finden sich in Tabelle 1.

### Beispiel 2

Die in Beispiel 1 beschriebene Verfahrensweise wird wiederholt mit dem Unterschied, dass anstelle von 1,6 g 1,1-Dimethyl-2-(3-aminopropyldimethylsilyl)-1-sila-2-azacyclopentan nun 2,2 g
1,1-Dimethyl-2-(3-aminopropyldimethylsilyl)-1-sila-2-azacyclopentan verwendet wurden.
Die Ergebnisse finden sich in Tabelle 1.

### Beispiel 3

Die in Beispiel 1 beschriebene Verfahrensweise wird wiederholt mit dem Unterschied, dass anstelle von 1,6 g 1,1-Dimethyl-2-(3-aminopropyldimethylsilyl)-1-sila-2-azacyclopentan nun 2,8 g
1',1-Dimethyl-2-(3-aminopropyldimethylsilyl)-1-sila-2-azacyclopentan verwendet wurden.
Die Ergebnisse finden sich in Tabelle 1.

**Tabelle 1**

| Beispiel | Auspressrate [g/min] | Härte Shore A | Modul [N/mm²] | Zugfestigkeit [N/mm²] | Reißdehnung [%] |
|---|---|---|---|---|---|
| 1 | 16,2 | 17 | 0,31 | 1,1 | 530 |
| 2 | 20,4 | 14 | 0,28 | 1,0 | 580 |
| 3 | 19,8 | 11 | 0,22 | 0,7 | 640 |

### Beispiel 4

535 g eines α,ω-Dihydroxypolydimethylsiloxans mit einer Viskosität von 80 000 mPas und 2,2 g 1,1-Dimethyl-2-(3-aminopropyldimethylsilyl)-1-sila-2-azacyclopentan werden in einem Planetenmischer miteinander gemischt und 60 Minuten gerührt. Anschlie-ßend werden 9 g 3-(2-Aminoethyl)aminopropyltriethoxysilan und 37,3 g Vinyltrimethoxysilan zugegeben und das Ganze weitere 15 Minuten gerührt. Schließlich wird der Ansatz durch homogenes Einmischen von 1,4 g Octylphosphonsäure, 54 g pyrogene Kieselsäure mit einer spezifischen Oberfläche von 150m²/g (käuflich erhältlich unter der Marke HDK® V15 bei der Wacker-Chemie GmbH, D-München), 270 g eines gemahlenen Calciumcarbonats (käuflich erhältlich unter der Bezeichnung "OMYA BLP 2" bei der Omya GmbH, D-Köln) und 2,7 g eines Zinnkatalysators, der hergestellt wird durch Umsetzung von 2,2 Teilen Di-n-butylzinndiacetat und 4 Teilen Tetraethoxysilan, vervollständigt. Die so erhaltene Mischung wird in feuchtigkeitsdichte Gebinde abgefüllt.

Die so erhaltene Masse wurde wie bei Beispiel 1 angegeben geprüft. Die Ergebnisse finden sich in Tabelle 2.

### Beispiel 5

Die in Beispiel 4 beschriebene Verfahrensweise wird wiederholt, mit dem Unterschied, dass anstelle von 2,2 g 1,1-Dimethyl-2-(3-aminopropyldimethylsilyl)-1-sila-2-azacyclopentan nun 2,9 g
1,1-Dimethyl-2-(3-aminopropyldimethylsilyl)-1-sila-2-azacyclopentan verwendet wurden.
Die Ergebnisse finden sich in Tabelle 2.

### Beispiel 6

Die in Beispiel 4 beschriebene Verfahrensweise wird wiederholt, mit dem Unterschied, dass anstelle von 2,2 g 1,1-Dimethyl-2-(3-aminopropyldimethylsilyl)-1-sila-2-azacyclopentan nun 3,6 g
1,1-Dimethyl-2-(3-aminopropyldimethylsilyl)-1-sila-2-azacyclopentan verwendet wurden.
Die Ergebnisse finden sich in Tabelle 2.

**Tabelle 2**

| Beispiel | Auspressrate [g/min] | Härte Shore A | Modul [N/mm²] | Zugfestigkeit [N/mm²] | Reißdehnung [%] |
|---|---|---|---|---|---|
| 4 | 14,4 | 31 | 0,58 | 1,8 | 420 |
| 5 | 15,0 | 24 | 0,47 | 1,5 | 470 |
| 6 | 13,8 | 17 | 0,36 | 1,1 | 520 |

## Patentansprüche

1. Vernetzbare Massen auf der Basis von Organosiliciumverbindungen enthaltend
(a) Polymere der Formel
XₙR₃₋ₙSi-A-SiR₂- (CH₂)₃NHY (I),
wobei
n gleich 1 oder 2 ist,
X gleich oder verschieden sein kann und Hydroxylrest oder hydrolysierbarer Rest bedeutet,
R gleich oder verschieden sein kann und einen einwertigen, gegebenenfalls substituierten Kohlenwasserstoffrest bedeutet,
Y gleich Wasserstoffatom oder Rest -Si (CH₃)₂(CH₂)₃NH₂ ist und
A einen zweiwertigen organischen oder siliciumorganischen Rest bedeutet,
(b) Polymere der Struktur
X¹ₖR⁵₃₋ₖSi-A¹-SiX¹ₖR⁵₃₋ₖ (II),
wobei
k jeweils gleich oder verschieden sein kann und 1 oder 2 ist, R⁵ gleich oder verschieden sein kann und eine für R angegebenen Bedeutung hat,
A¹ eine für Rest A angegebene Bedeutung hat und
X¹ gleich oder verschieden sein kann und eine für X angegebenen Bedeutung hat,
gegebenenfalls
(c) Silane der Formel
R⁶ₘSiX²₄₋ₘ (III)
und/oder deren Teilhydrolysate, wobei
m 0 oder 1 ist,
R⁶ gleich oder verschieden sein kann und eine für R angegebene Bedeutung hat und
X² gleich oder verschieden sein kann und eine für X angegebene Bedeutung hat,
und gegebenenfalls
(d) Silane der Formel
R⁴ₒSiR⁷ₚX³₄₋ₒ₋ₚ (IV)
und/oder deren Teilhydrolysate, wobei
p 0 oder 1 ist,
o 1 oder 2 ist,
R⁷ gleich oder verschieden sein kann und eine für R angegebene Bedeutung hat,
X³ gleich oder verschieden sein kann und eine für X angegebene Bedeutung hat und
R⁴ gleich oder verschieden sein kann und mit Stickstoffatom, Sauerstoffatom, Schwefelatom und/oder Halogenatom substituierte, einwertige, SiC-gebundene Kohlenwasserstoffreste bedeutet, mit der Maßgabe, dass die Summe o+p kleiner 3 ist.

2. Vernetzbare Massen gemäß Anspruch 1, **dadurch gekennzeichnet, dass** es sich bei Rest A um zweiwertige Polyetherreste oder zweiwertige Polydiorganosiloxanreste handelt.

3. Vernetzbare Massen gemäß Anspruch 1 oder 2, **dadurch gekennzeichnet, dass** es sich bei Rest A¹ um zweiwertige Polyetherreste oder zweiwertige Polydiorganosiloxanreste handelt.

4. Vernetzbare Massen gemäß einem oder mehreren der Ansprüche 1 bis 3, **dadurch gekennzeichnet, dass** sie Polymer der Formel (I) in Mengen von 10 bis 90 Gewichtsteilen, bezogen auf 100 Gewichtsteile vernetzbarer Masse, enthalten.

5. Vernetzbare Massen gemäß einem oder mehreren der Ansprüche 1 bis 4, **dadurch gekennzeichnet, dass** sie Polymer der Formel (II) in Mengen von 10 bis 90 Gewichtsteilen, bezogen auf 100 Gewichtsteile vernetzbarer Masse, enthalten.

6. Vernetzbare Massen gemäß einem oder mehreren der Ansprüche 1 bis 5, **dadurch gekennzeichnet, dass** es sich um solche handelt, die aus
(a) Polymere der Formel (I),
(b) Polymere der Formel (II),
gegebenenfalls
(c) Silan der Formel (III),
gegebenenfalls
(d) Silan der Formel (IV),
gegebenenfalls
(e) Katalysator,
gegebenenfalls
(f) Weichmacher,
gegebenenfalls
(g) Füllstoffe und
gegebenenfalls
(h) Additive
bestehen.

7. Verfahren zur Herstellung der Massen gemäß einem oder mehreren der Ansprüche 1 bis 6, **dadurch gekennzeichnet, dass** in einer
1.Stufe
cyclisches Silazan der Formel (V) mit einem OH-terminierten Polydiorganosiloxan umgesetzt wird, wobei die Mengenverhältnisse so gewählt werden, dass sich bis zu 30% der am OH-terminierten Polydiorganosiloxan befindlichen OH-Gruppen mit dem cyclischen Silazan der Formel (V) umsetzen können, sowie anschließend in einer
2. Stufe
durch Zufügen der weiteren Bestandteile (c) bis (h) die vernetzbare Masse nach bekannten Methoden fertiggestellt wird.

8. Formkörper, hergestellt durch Vernetzung der Zusammensetzung gemäß einem oder mehreren der Ansprüche 1 bis 6 bzw. hergestellt nach Anspruch 7.

## Claims

1. Crosslinkable compositions based on organosilicon compounds, comprising
(a) polymers of the formula
XₙR₃₋ₙSi-A-SiR₂-(CH₂)₃NHY (I)
where
n is 1 or 2,
X may be the same or different and is a hydroxyl radical or hydrolysable radical,
R may be the same or different and is a monovalent, optionally substituted hydrocarbon radical,
Y is a hydrogen atom or a -Si(CH₃)₂(CH₂)₃NH₂ radical and
A is a divalent organic or organosilicon radical,
(b) polymers of the structure
X¹ₖR⁵₃₋ₖSi-A¹-SiX¹ₖR⁵₃₋ₖ (II)
where
k may each be the same or different and is 1 or 2,
R⁵ may be the same or different and has a definition specified for R,
A¹ has a definition specified for A radical and
X¹ may be the same or different and has a definition specified for X,
optionally
(c) silanes of the formula
R⁶ₘSiX²₄₋ₘ (III)
and/or partial hydrolysates thereof, where
m is 0 or 1,
R⁶ may be the same or different and has a definition specified for R and
X² may be the same or different and has a definition specified for X,
and optionally
(d) silanes of the formula
R⁴ₒSiR⁷ₚX³₄₋ₒ₋ₚ (IV)
and/or partial hydrolysates thereof, where
p is 0 or 1,
o is 1 or 2,
R⁷ may be the same or different and has a definition specified for R,
X³ may be the same or different and has a definition specified for X and
R⁴ may be the same or different and is monovalent, SiC-bonded hydrocarbon radical substituted by nitrogen, oxygen, sulphur and/or halogen, with the proviso that the sum of o+p is less than 3.

2. Crosslinkable compositions according to Claim 1, **characterized in that** the A radical is a divalent polyether radical or divalent polydiorganosiloxane radical.

3. Crosslinkable compositions according to Claim 1 or 2, **characterized in that** the A¹ radical is a divalent polyether radical or divalent polydiorganosiloxane radical.

4. Crosslinkable compositions according to one or more of Claims 1 to 3, **characterized in that** they contain polymer of the formula (I) in amounts of from 10 to 90 parts by weight, based on 100 parts by weight of crosslinkable composition.

5. Crosslinkable compositions according to one or more of Claims 1 to 4, **characterized in that** they contain polymer of the formula (II) in amounts of from 10 to 90 parts by weight, based on 100 parts by weight of crosslinkable composition.

6. Crosslinkable compositions according to one or more of Claims 1 to 5, **characterized in that** they consist of
(a) polymers of the formula (I),
(b) polymers of the formula (II),
optionally
(c) silane of the formula (III),
optionally
(d) silane of the formula (IV),
optionally
(e) catalyst,
optionally
(f) plasticizer,
optionally
(g) fillers and
optionally
(h) additives.

7. Process for preparing the compositions according to one or more of Claims 1 to 6, **characterized in that**, in a
1st stage
cyclic silazane of the formula (V) is reacted with an OH-terminated polydiorganosiloxane, and the ratios are selected such that up to 30% of the OH groups on the OH-terminated polydiorganosiloxane can react with the cyclic silazane of the formula (V), and subsequently, in a
2nd stage,
the further constituents (c) to (h) are added to complete the crosslinkable composition by known methods.

8. Mouldings produced by crosslinking the composition according to one or more of Claims 1 to 6 or prepared according to Claim 7.

## Revendications

1. Masses réticulables à base de composés organosiliciés contenant
(a) des polymères de formule
XₙR₃₋ₙSi-A-SiR₂-(CH₂)₃NHY (I),
dans laquelle
n vaut 1 ou 2,
X peut être identique ou différent et signifie un radical hydroxyle ou un radical hydrolysable,
R peut être identique ou différent et signifie un radical hydrocarboné monovalent, le cas échéant substitué,
Y représente un atome d'hydrogène ou le radical -Si(CH₃)₂(CH₂)₃NH₂ et
A signifie un radical divalent organique ou organosilicié,
(b) des polymères de structure
X¹ₖR⁵₃₋ₖSi-A¹-SiX¹ₖR⁵₃₋ₖ (II),
dans laquelle
k peut être à chaque fois identique ou différent et vaut 1 ou 2,
R⁵ peut être identique ou différent et présente une signification indiquée pour R,
A¹ présente une signification indiquée pour le radical A et
X¹ peut être identique ou différent et présente une signification indiquée pour X,
le cas échéant
(c) des silanes de formule
R⁶ₘSiX²₄₋ₘ (III)
et/ou leurs hydrolysats partiels, où
m vaut 0 ou 1,
R⁶ peut être identique ou différent et présente une signification indiquée pour R et
X² peut être identique ou différent et présente une signification indiquée pour X,
et le cas échéant
(d) des silanes de formule
R⁴ₒSiR⁷ₚX³₄₋ₒ₋ₚ (IV)
et/ou leurs hydrolysats partiels, où
p vaut 0 ou 1,
o vaut 1 ou 2,
R⁷ peut être identique ou différent et présente une signification indiquée pour R,
X³ peut être identique ou différent et présente une signification indiquée pour X et
R⁴ peut être identique ou différent et signifie des radicaux hydrocarbonés monovalents, liés par SiC, substitués par un ou plusieurs atomes d'azote, d'oxygène, de soufre et/ou d'halogène,
à condition que la somme o+p soit inférieure à 3.

2. Masses réticulables selon la revendication 1, **caractérisées en ce qu'**il s'agit, pour le radical A, de radicaux polyéther divalents ou de radicaux polydiorganosiloxane divalents.

3. Masses réticulables selon la revendication 1 ou 2, **caractérisées en ce qu'**il s'agit, pour le radical A¹, de radicaux polyéther divalents ou de radicaux polydiorganosiloxane divalents.

4. Masses réticulables selon l'une ou plusieurs des revendications 1 à 3, **caractérisées en ce qu'**elles contiennent le polymère de formule (I) en des quantités de 10 à 90 parties en poids, par rapport à 100 parties en poids de masse réticulable.

5. Masses réticulables selon l'une ou plusieurs des revendications 1 à 4, **caractérisées en ce qu'**elles contiennent le polymère de formule (II) en des quantités de 10 à 90 parties en poids, par rapport à 100 parties en poids de masse réticulable.

6. Masses réticulables selon l'une ou plusieurs des revendications 1 à 5, **caractérisées en ce qu'**il s'agit de masses constituées par
(a) des polymères de formule (I),
(b) des polymères de formule (II),
le cas échéant
(c) un silane de formule (III),
le cas échéant
(d) un silane de formule (IV),
le cas échéant
(e) un catalyseur,
le cas échéant
(f) un plastifiant,
le cas échéant
(g) des charges et
le cas échéant
(h) des additifs.

7. Procédé pour la préparation des masses selon l'une ou plusieurs des revendications 1 à 6, **caractérisé en ce que**,
dans une première étape,
on transforme un silazane cyclique de formule (V) avec un polydiorganosilane terminé par OH, les rapports des quantités étant choisis de telle manière que jusqu'à 30% des groupements OH se trouvant sur le polydiorganosiloxane terminé par OH peuvent réagir avec le silazane cyclique de formule (V), et ensuite,
dans une deuxième étape,
la masse réticulable est préparée selon des procédés connus par addition des autres constituants (c) à (h).

8. Corps façonné, préparé par réticulation de la composition selon l'une ou plusieurs des revendications 1 à 6 resp. préparé selon la revendication 7.
